**Europäisches Patentamt**

(19) **European Patent Office**

**Office européen des brevets**

(11) Veröffentlichungsnummer: **0 058 233**
**B1**

(12) **EUROPÄISCHE PATENTSCHRIFT**

(45) Veröffentlichungstag der Patentschrift:
03.07.85

(51) Int. Cl.⁴: **G 21 C 17/00**

(21) Anmeldenummer: 81108654.5

(22) Anmeldetag: 21.10.81

(54) Verfahren und Vorrichtung zur Detektion von Natrium-Leckagen in Dampferzeugern.

(30) Priorität: 16.01.81 DE 3101306

(43) Veröffentlichungstag der Anmeldung:
25.08.82 Patentblatt 82/34

(45) Bekanntmachung des Hinweises auf die Patenterteilung:
03.07.85 Patentblatt 85/27

(84) Benannte Vertragsstaaten:
BE DE FR GB IT NL

(56) Entgegenhaltungen:
DD - C - 129 385
DD - C - 131 313
DE - A - 1 917 590
DE - A - 2 410 660
DE - B - 1 046 208

(73) Patentinhaber: **INTERATOM Gesellschaft mit
beschränkter Haftung, Friedrich-Ebert-Strasse,
D-5060 Bergisch Gladbach 1 (DE)**

(72) Erfinder: **Kellner, Albrecht, Dr., Hasenweg 10,
D-5253 Lindlar-Schnitzhöhe (DE)**

(74) Vertreter: **Mehl, Ernst, Dipl.-Ing. et al, Postfach 22 01 76,
D-8000 München 22 (DE)**

## Beschreibung

Die Erfindung betrifft ein Verfahren und eine Vorrichtung zur Detektion von Natrium-Leckagen in Dampferzeugern. Bei bestimmten Kraftwerkstypen wird die Wärme zunächst in einem Natrium-Kreislauf abgeführt. Unter Umständen wird dieser erste Natrium-Kreislauf mit einem Wärmetauscher an einen zweiten Natrium-Kreislauf angekoppelt, um die Verschleppung von Radioaktivität zu unterbinden. Anschliessend erhitzt das heisse Natrium des Natrium-Kreislaufs in einem Dampferzeuger Wasserdampf, der schliesslich die Turbinen antreibt. Im folgenden sei mit Primärkreislauf immer der am Dampferzeuger angeschlossene Natrium-Kreislauf bezeichnet und mit Sekundärkreislauf der Wasser-Dampf-Kreislauf.

Zu den möglichen Störfällen in einem solchen Natrium-Wasser-Wärmetauscher gehört ein Leck, durch welches Natrium mit Wasser in Berührung kommen kann. Die äusserst heftige Reaktion von Natrium mit Wasser, bei der Wasserstoff und Natriumhydroxid entsteht, kann schwere Schäden am Dampferzeuger und in dem übrigen System hervorrufen. Ausserdem bildet der frei werdende Wasserstoff mit Luft ein explosives Gemisch, so dass bei Austreten des Wasserstoffs aus dem System Folgeexplosionen zu befürchten sind.

Daher ist es äusserst wichtig, solche Natrium-Leckagen in Dampferzeugern möglichst schnell und im Anfangsstadium zu detektieren.

Bisher wurden drei verschiedene Verfahren zur Detektion von solchen Natrium-Leckagen angewendet, nämlich erstens ein chemischer Nachweis der Reaktionsprodukte, zweitens ein Nachweis der Reaktionsgeräusche durch akustische Messverfahren und drittens ein mittelbarer Nachweis der Wasserstoffblasen anhand des Ansteigens des Natriumspiegels im Stosstank.

Nachteile dieser Verfahren sind die relativ lange Ansprechzeit oder die quantitativ ungenaue Erfassung der Leckgrösse. Ausserdem sind die bisher verwendeten Verfahren teilweise recht aufwendig, wodurch sich Verfügbarkeitsprobleme ergeben können.

Zu der allgemeinen Instrumentierung eines Wärmetauschers gehören Temperaturerfassungssysteme im Primär- und Sekundärkreislauf. Mit Hilfe dieser Temperaturerfassungssysteme und durch zusätzliche Messung der Durchflussmengen in beiden Kreisen wird die Leistungsauskopplung in einem Wärmetauscher geregelt. Dabei wird der Wärmetauscher in einen Gleichgewichtszustand gebracht, bei dem die vom Primärkreis zugeführte Wärmeenergie genau gleich der im Sekundärkreis abgeführten Wärmeenergie ist. Störungen in der Energiebilanz eines Wärmetauschers durch die bei Natrium-Wasser-Reaktionen entstehende Wärme wurden bei den Regelungs- und Überwachungskonzepten bisher nicht berücksichtigt.

Aufgabe der vorliegenden Erfindung ist ein diversitäres Verfahren zur Detektion von Natrium-leckagen in Dampferzeugern, welches die angeführten Nachteile nicht aufweist. Ein Schwerpunkt des Verfahrens liegt bei der Schnelligkeit der Detektion und ein weiterer Schwerpunkt in der Einfachheit und Betriebssicherheit. Darüberhinaus sollen schon vorhandene Geräte und Einrichtungen zur Temperaturmessung ausgenutzt werden können.

Zur Lösung dieser Aufgabe wird ein Verfahren nach dem Hauptanspruch vorgeschlagen. Danach soll die durch die Reaktion von Natrium mit Wasser im Dampferzeuger und/oder im Primär- bzw. Sekundärkreislauf erzeugte charakteristische Temperaturänderung gemessen werden. Da im Dampferzeuger normalerweise umgesetzte Leistungen sich in der Grössenordnung von 100 MW bewegen und die Regelungskonzepte bei Wärmetauschern auf dem Prinzip der ausgeglichenen Energiebilanz beruhen, wurde der vorgeschlagene Weg zum Lecknachweis nicht erkannt. Tatsächlich ist die durch die Reaktion von Natrium mit Wasser erzeugte Leistung vergleichsweise klein, jedoch zeigen genaue Rechnungen, dass schon bei kleinen Lecks von einigen $mm^2$ Querschnitt z.B. 100 g/s Natrium mit Wasser reagieren können. Je nach den Temperaturen der beiden Reaktionspartner wird dabei schon eine Leistung in der Grössenordnung von 0,7 MW frei. Da Temperaturmessungen heute mit grosser Genauigkeit möglich sind, lässt sich der durch diese zusätzliche Leistung entstehende Temperaturanstieg im Sekundär- bzw. Primärkreis nachweisen. Dazu kommt, dass die Blasenbildung den Durchsatz im Wärmetauscher im Laufe der Zeit behindert und dadurch eine Verstärkung des erwarteten Temperatureffektes eintritt. Weitere Angaben zu diesem Problemkreis befinden sich im letzten Absatz der Beschreibung. Da Temperaturerhöhungen im Primär- bzw. Sekundärkreis eines Dampferzeugers nach den bisherigen Ausführungen mindestens zwei Ursachen haben können, nämlich Änderungen in der Leistungsauskopplung oder Natriumleckagen, ist es wegen der ebenfalls auf Temperaturmessungen beruhenden Regelungskonzepte wichtig, beide Effekte unterscheiden zu können. Bisher wurde der relativ kleine, zusätzliche Effekt durch Natrium-Leckagen von der Fachwelt vernachlässigt. Wie anhand der Zeichnung noch näher erläutert wird, lässt sich aber auch dieser kleine Effekt anhand bestimmter Charakteristika deutlich erkennen. Mit Hilfe der erfindungsgemässen Lehre ist es daher möglich, aus Temperaturmessungen am Dampferzeuger ausser den für die Regelung notwendigen Informationen auch noch Aussagen über das Vorhandensein einer Leckage zu gewinnen, wobei eventuell schon vorhandene Instrumentierung zumindest teilweise mit ausgenutzt werden kann.

Da sich die Blasenbildung zunächst kaum auf den Durchfluss auswirkt, wird die eingespeiste zusätzliche Leistung lediglich als eine Temperaturerhöhung im Primär- bzw. Sekundärkreislauf festgestellt.

Als noch wesentlich schneller reagierendes Verfahren zur Feststellung von Natriumlecks wird vorgeschlagen, zusätzliche Temperaturfühler im Dampferzeuger selbst anzubringen und mit diesen die durch die Reaktion von Natrium mit Wasser bewirkte Temperaturänderung zu messen. Das hat den Vorteil, dass die Temperatursteigerung am Ort der Reaktion selbst gemessen wird und daher beim Auftreten eines Natriumlecks eine schnelle und starke Änderung der Temperatur festgestellt wird. Die Temperaturfühler, die bei Normalbetrieb die monotone Temperaturverteilung im Dampferzeuger angeben, zeigen beim Auftreten eines Lecks eine stark veränderte Temperaturcharakteristik, meist mit einem Maximum, wodurch eine gute Nachweismöglichkeit für Lecks gegeben ist.

In aller Regel wird bei Feststellung eines Lecks der Dampferzeuger schnellstmöglich abgeschaltet werden, um grössere Schäden zu vermeiden. Gegebenenfalls ist aber eine quantitative Erfassung der Leckrate vor der Abschaltung des Kreislaufs gemäss Anspruch 2 möglich, bei dem die Änderung des Produktes von Temperatur und Durchfluss im Primär- bzw. Sekundärkreislauf gemessen wird. Da nach Verlauf einer kurzen Zeitspanne — etwa der Zeit, die das Natrium für einen Umlauf im Primärkreislauf braucht – der Durchfluss wegen der entstandenen Gasblasen erheblich abnimmt, ist eine genaue quantitative Erfassung der Leckrate nur durch Temperaturmessung nicht mehr möglich. Durch die Beobachtung des Produktes von Temperatur und Durchfluss lässt sich allerdings die Leckrate quantitativ anhand der Leistungsbilanz feststellen.

Im Anspruch 3 wird vorgeschlagen, die Änderung der Messgrössen nicht absolut, sondern durch Vergleich mit den Messgrössen an Parallelmodulen festzustellen. Da üblicherweise bei einem Kraftwerk mehrere gleichartige Dampferzeuger gleichzeitig betrieben werden, ist es leicht möglich, die Messwerte durch Vergleich mit Parallelmodulen zu bewerten. Der Vorteil dieser Methode ist, dass die relative Abweichung der Messwerte mit der Zeit grösser wird, auch wenn die Änderung pro Zeiteinheit nicht besonders gross ist und daher bei Absolutmessungen nicht festgestellt werden könnte. Auch zur quantitativen Erfassung der Leckrate trägt diese Methode massgeblich bei. Ausserdem reagieren Parallelmodulen gleichartig auf Betriebszustandsänderungen, so dass solche Ereignisse nicht als Leck interpretiert werden.

Im Anspruch 4 wird eine Vorrichtung zur Detektion von Natrium-Leckagen in Dampferzeugern vorgeschlagen, die als wesentliches Merkmal die Anordnung von Temperaturfühlern im Inneren des Dampferzeugers aufweist. Bei der bisher üblichen Instrumentierung ist es nicht vorgesehen, die Temperatur im Dampferzeuger selbst zu überwachen, da nur die im Primär- bzw. Sekundärkreislauf übertragene Leistung festgestellt werden soll. Die Aufgabenstellung der vorliegenden Erfindung lässt sich aber mit solchen Temperaturfühlern im Dampferzeuger selbst am besten lösen. Zusätzlich würden diese Temperaturfühler aber auch Informationen über den Betriebszustand des Dampferzeugers liefern können und so zur Redundanz der Instrumentierung beitragen. Da im Dampferzeuger selbst angeordnete Temperaturfühler, insbesondere in das Natrium eintauchende in der Nähe der Wärmeaustauschflächen befindliche, die Reaktionswärme von Natrium-Wasser-Reaktionen fast direkt am Ort ihrer Entstehung nachweisen, ist bei Auftreten eines Lecks eine wesentlich grössere Änderung der Messwerte zu erwarten als bei ausserhalb des Dampferzeugers angeordneten Temperaturfühlern. Damit wird auch die Grösse der nachweisbaren Lecks verringert und die Schnelligkeit der Detektion vergrössert.

In spezieller Ausgestaltung der Erfindung wird nach Anspruch 5 vorgeschlagen, die Temperaturfühler in einer Messlanze hintereinander anzuordnen. Diese Messlanze sollte im Dampferzeuger im Bereich der Wärmeaustauschfläche angebracht werden. Die genaue Ausführungsform dieser Messlanze hängt vom Typ des verwendeten Dampferzeugers ab. Eine solche Messlanze liesse sich nachträglich in die üblichen Wärmetauscher einbauen und könnte bei geeigneter Auslegung der Durchführung in der Gefässwand auch zu Wartungsarbeiten herausgezogen werden.

In besonderer Ausgestaltung der Erfindung wird im Anspruch 6 vorgeschlagen, nur einen Temperaturfühler zu verwenden, der über einen grossen Bereich des Dampferzeugers ausgedehnt ist. Dieser Temperaturfühler könnte beispielsweise aus einem flüssigkeits- oder gasgefüllten Rohr bestehen, dessen Innendruck gemessen wird.

Die Form und der Verlauf eines solchen Temperaturfühlers sollte der Form der Wärmeaustauschflächen in etwa angepasst sein. Abgesehen von der einfachen und mit geringem Aufwand zu verwirklichenden Ausführung könnte ein solcher Temperaturfühler bei grosser Betriebssicherheit noch zur Feststellung anderer Betriebsstörungen im Dampferzeuger benutzt werden.

Zwei Ausführungsbeispiele der Erfindung und Diagramme, die bei der Erprobung der vorliegenden Erfindung aufgenommen wurden, sind in der Zeichnung dargestellt.

Dabei zeigt:
Figur 1 einen Dampferzeuger mit mehreren Temperaturfühlern,
Figur 2 einen Dampferzeuger mit einem ausgedehnten Temperaturfühler,
Figur 3 anhand eines Diagramms das Temperaturverhalten im Dampferzeuger bei Auftreten eines Natrium-Lecks und
Figur 4 anhand eines Diagramms das Temperaturverhalten am Dampfaustritt bzw. am Natriumaustritt des Dampferzeugers bei Auftreten eines Natrium-Lecks.

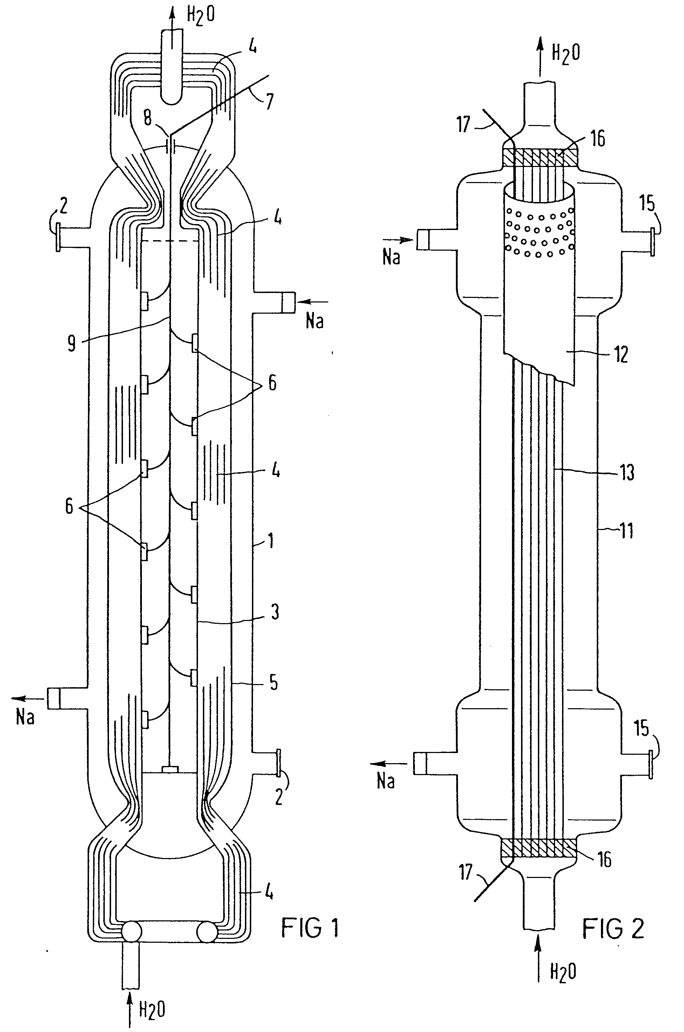

In Figur 1 ist ein Wendelrohr-Dampferzeuger dargestellt, der nun entsprechend der Erfindung mit zusätzlichen Temperaturfühlern ausgestattet ist. In den Dampferzeuger 1 tritt im oberen Teil das etwa 520°C heisse Natrium des Primärkreislaufes ein und verlässt den Dampferzeuger im unteren Teil mit ca. 335°C. Dabei schützen Berstscheiben 2 den Dampferzeuger vor gefährlichem Überdruck. Um ein Zentralrohr 3 sind Rohrbündel 4 angeordnet, in denen der Wärmeaustausch zwischen dem Natrium-Kreislauf und dem von unten in den Dampferzeuger einströmendem Wasser des Sekundärkreislaufes stattfindet.

Das Rohrbündel 4 wird innen von dem Zentralrohr 3 und aussen von dem Strömungsleitmantel 5 begrenzt. An der Aussenwand des Zentralrohres 3 sind mehrere Thermoelemente 6 befestigt. Ihre Anzahl und Verteilung auf der Aussenwand hängt von den jeweiligen Anforderungen ab. Um eine gleichmässige Verteilung im Inneren des Zentralrohres 3 zu erreichen, können die Thermoelemente 6 beispielsweise in mehreren Reihen, versetzt oder in gleichen Abständen dem Verlauf einer Spirale von oben nach unten folgend angeordnet sein. Die notwendigen Messleitungen können über ein Zuleitungsrohr 7 durch eine Durchführung 8 und einen sich im Inneren des Zentralrohres 3 verzweigenden Leitungsstrang 9 erfolgen. Dabei hängt es von dem jeweiligen Auswertungskonzept ab, ob die Thermoelemente schon im Inneren des Zentralrohres alle oder in Gruppen zusammengefasst werden oder ob für jedes einzelne Thermoelement eine Leitung nach aussen gelegt wird. Bei der in diesem Ausführungsbeispiel beschriebenen Anordnung kann auch schon die Summe aller Messwerte aus den Thermoelementen eine Information über Natrium-Lecks liefern. Eine sehr viel genauere Erfassung der Betriebsdaten und des Ortes eines Natrium-Lecks lässt sich aber nur erreichen, wenn die Messwerte der Thermoelemente einzeln nach aussen geführt und ausgewertet werden. Im Normalbetrieb spiegeln dann die Messwerte der einzelnen Thermoelemente in etwa den Temperaturverlauf im Dampferzeuger wieder. Beim Auftreten eines Natrium-Lecks zeigt dann das dem Leck am nächsten liegende Thermoelement den stärksten Temperaturanstieg an und liefert so zusätzlich eine Information über den Ort des Lecks. Zusätzlich ist die Ansprechzeit und die quantitative Genauigkeit bei der Erfassung eines Natrium-Lecks bei diesem Ausführungsbeispiel sehr gut.

Als vereinfachte Ausführungsform, die sich auch für Geradrohr-Dampferzeuger anwenden lässt, zeigt die Figur 2 einen Dampferzeuger mit nur einem Temperaturfühler. Dabei wird wiederum ein üblicher Dampferzeuger 11, der von oben nach unten mit dem Natrium des Primärkreislaufs durchströmt wird, dargestellt. Im Inneren des Dampferzeugers befindet sich ein Strömungsmantel 12, der ein Rohrbündel 13 umgibt, durch welches Wasser von unten nach oben den Dampferzeuger durchströmt und die Wärme aus dem Primärkreislauf übernimmt. Der Dampferzeuger ist durch Berstscheiben 15 gegen Überdruck im Natriumsystem geschützt, Lochplatten 16 halten das Rohrbündel in seiner Lage fest. Im Bereich des Rohrbündels 13 verläuft ein Messrohr 17, welches oben und unten mit dem Mantel des Dampferzeugers an der Durchführungsstelle fest verschweisst ist. Dieses Messrohr 17 kann auf verschiedene Art benutzt werden. Eine Möglichkeit ist, den Innendruck dieses Messrohres, welches zu diesem Zweck dann mit Gas oder einer Flüssigkeit gefüllt ist, als Mass für die Temperatur im Inneren des Dampferzeugers zu benutzen. Das hat den Vorteil, dass keine temperaturbeständigen Isolierungen für elektrische Zuleitungen im Inneren des Dampferzeugers verlegt werden müssen und auch keine störanfälligen Thermoelemente verwendet werden. Beim Auftreten eines Natrium-Lecks im Bereich des Rohrbündels erhöht sich auch die Temperatur des Messrohres und damit das Volumen des Messrohrinhaltes bzw. sein Innendruck, was dann als Hinweis auf dieses Natrium-Leck dient. Eine andere Möglichkeit zur Nutzung des Messrohres ist, dieses so zu gestalten, dass eine Messlanze mit einem oder mehreren Temperaturfühlern in das Innere dieses Rohres und damit in den Bereich des Rohrbündels 13 eingeführt werden kann. Eine Messlanze ohne ein solches Führungsrohr wäre allerdings empfindlicher, da der direkte Kontakt mit dem Natrium bessere Wärmeleitung bewirkt. Ein Messrohr 17 als Führungskanal für eine Messlanze würde Wartungs- und Reparaturarbeiten an der Messlanze aber wesentlich vereinfachen und ausserdem ein nachträgliches Auswechseln oder Verändern der Instrumentierung ermöglichen. Bei Ausrüstung der Messlanze mit mehreren Thermoelementen lassen sich die gleichen Vorteile wie bei dem Ausführungsbeispiel, welches anhand Figur 1 beschrieben wurde, erreichen.

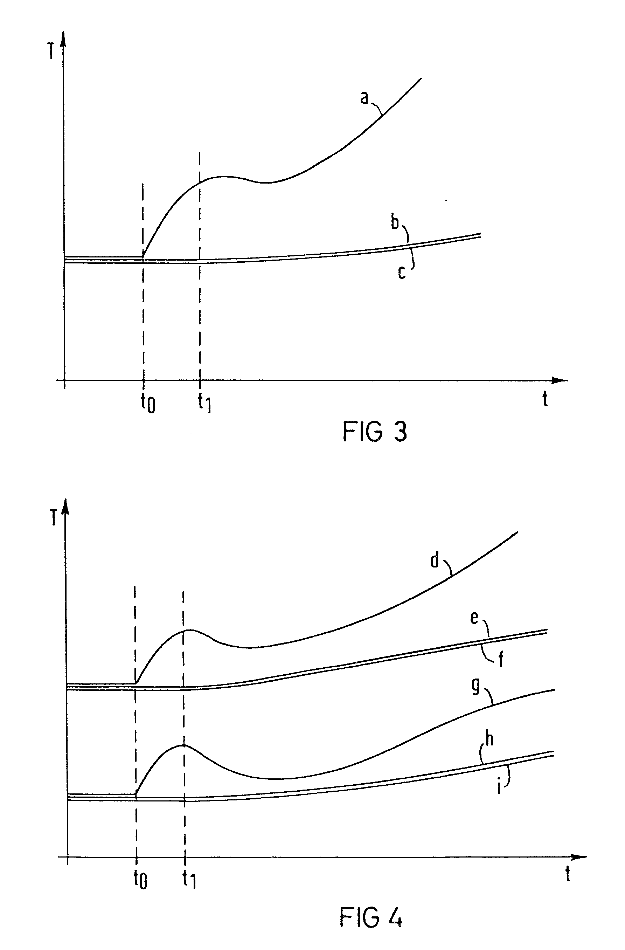

Figur 3 zeigt anhand eines Diagramms das Temperaturverhalten im Inneren von Dampferzeugern, wenn nur ein Messfühler vorhanden ist bzw. die Summe aller Messfühler ausgewertet wird. Dabei zeigt die Kurve a den Verlauf der Temperatur T in Abhängigkeit von der Zeit t, wenn zum Zeitpunkt $t_0$ ein Natrium-Leck im Dampferzeuger auftritt. Ab diesem Zeitpunkt steigt die Temperatur, welche mit dem Messfühler im defekten Dampferzeuger gemessen wird, an, da zusätzlich zu der aus dem Primärkreislauf stammenden Energie nun noch die Reaktionswärme aus der Natrium-Wasser-Reaktion hinzukommt. Der in dem Diagramm nur qualitativ angedeutete Verlauf der Temperaturkurve hängt zum einen vom Ort des Lecks im Dampferzeuger ab und von einigen anderen Betriebsbedingungen. Unter Umständen kann die Temperatur im Inneren des Dampferzeugers nochmals fallen, was zu dem Zeitpunkt eintritt, zu dem die Blasenbildung im Natrium eine deutliche Behinderung der Strömung im Primärkreislauf bewirkt, da dann das verlangsamte Natrium am Wasser stärker gekühlt wird. Ab diesem Zeitpunkt müssen die parallel betriebenen Dampferzeuger, deren Temperaturverhalten in den Kurven b und c beschrieben ist, einen Teil des Wärmeaustauschs für den defekten Dampferzeuger übernehmen, so dass deren Temperatur im Inneren langsam zu steigen beginnt. In ungleich höherem Masse steigt aber die Temperatur im Inneren des Dampferzeugers weiter an, da dort die heftige Natrium-Wasser-Reaktion weiterhin eine erhebliche Leistung produziert, die nun von dem verlangsamten Natrium nicht mehr so schnell abgeführt wird. Das heist: die Differenz zwischen der Temperatur im defekten Dampferzeuger und der in den Parallelmodulen wird immer grösser, so dass sich ein Leck auch aus dieser Differenz feststellen lässt, wie im Anspruch 5 beschrieben wird. Das Diagramm soll nur einen qualitativen Überblick über die möglichen Verhältnisse bei Auftreten eines Lecks in den verschiedenen parallel beschriebenen Dampferzeugern eines Kraftwerks geben.

Einen ebenfalls qualitativen Überblick über die erwarteten Temperaturverhältnisse, gemessen am Dampfaustritt bzw. Natriumaustritt der Dampferzeuger, liefert das in Figur 4 dargestellte Diagramm. Es ist wiederum das Verhalten der Temperatur T an verschiedenen Messpunkten gegen die Zeit t nach dem Auftreten eines Natrium-Lecks im Dampferzeuger zum Zeitpunkt $t_0$ aufgetragen. Dabei zeigt die Kurve d das Temperaturverhalten, gemessen am Dampfaustritt des defekten Dampferzeugers, während die Kurven e und f das Temperaturverhalten von Parallelmodulen, gemessen am Dampfaustritt, darstellen. Auch hier kann, je nach Betriebsbedingungen, ein Maximum im Temperaturverlauf auftreten, bevor der Natrium-Durchfluss durch Blasenbildung behindert wird. Ebenso steigt die Temperatur in den Parallelmodulen an, sobald diese einen Teil des Wärmeaustauschs für den defekten Dampferzeuger übernehmen müssen. Das gleiche Verhalten lässt sich auch durch Temperaturmessung am Natriumaustritt feststellen. Hier zeigt die Kurve g das Verhalten am Natriumaustritt des defekten Dampferzeugers und die Kurven h und i das Temperaturverhalten am Natriumaustritt der Parallelmodulen. Quantitativ können die Verhältnisse recht stark je nach Lage des Lecks und der Betriebsbedingungen schwanken, jedoch deutet ein Anstieg der Temperatur am Dampf- oder Natriumaustritt eines Dampferzeugers bei gleichbleibender Temperatur an den Parallelmodulen immer auf ein Natrium-Leck in dem betreffenden Dampferzeuger hin. Daher lässt sich eine sichere Natrium-Leck-Detektion für mittelgrosse Lecks anhand der durch die Natrium-Wasser-Reaktion erzeugten Leistung zuverlässig durchführen. Gegebenenfalls kann eine automatische Abschaltung aufgrund der gemessenen Temperaturwerte vorgesehen werden. Ein den Temperaturkurven d und g entsprechendes Verhalten konnte bei einer tatsächlichen Messung an einem Dampferzeuger beim Auftreten eines Natriumlecks bereits festgestellt werden, womit die Funktionsfähigkeit der Erfindung belegt wird.

Zum Schluss seien noch einige Bemerkungen zu der Energiebilanz der Natrium-Wasser-Reaktion gemacht:

Die Reaktion $Na + H_2O \longrightarrow NaOH + \frac{1}{2} H_2$ setzt bei einer Temperatur der Ausgangsstoffe von 298 Kelvin etwa 158 kJ/mol an Wärme frei. Da für den hier behandelten Fall eines Natrium-Lecks in einem Natrium-Wasser-Wärmetauscher die Temperaturen der Reaktionspartner erheblich höher liegen, sind je nach Lage des Lecks im Dampferzeuger entsprechende Korrekturen anzubringen. Dann ist bei theoretischen Betrachtungen zu berücksichtigen, wie sich die frei werdende Energie auf die Reaktionsprodukte verteilt und welcher Anteil an den Primär- bzw. Sekundärkreislauf abgegeben wird.

Unter Berücksichtigung aller Randbedingungen ergeben sich für die an den Natriumkreislauf abgegebene Wärme etwa 7 bis 9 MJ/kg reagierendes Natrium. Ein Teil davon wird dabei noch im Dampferzeuger an den Sekundärkreis übertragen. Schon bei Reaktionsraten von 100 g/sec Natrium beträgt die am Leckort eingespeiste Leistung fast 1 MW, was sich als Temperaturanstieg nachweisen lässt.

**Patentansprüche**

1. Verfahren zur Detektion von Natrium-Leckagen in Dampferzeugern, bei dem die Reaktion von Natrium mit Wasser beobachtet wird, dadurch gekennzeichnet, dass zu diesem Zweck die durch die Reaktion von Natrium mit Wasser erzeugte charakteristische Temperaturänderung im Dampferzeuger und/oder im Primär- bzw. Sekundärkreislauf gemessen wird.

2. Verfahren nach Anspruch 1, dadurch gekennzeichnet, dass die quantitative Erfassung der Leckrate durch die Messung der Änderung des Produktes von Temperatur und Durchfluss im Primär- bzw. Sekundärkreislauf erfolgt.

3. Verfahren nach Anspruch 1 oder 2, dadurch gekennzeichnet, dass die Feststellung der Änderung der Messgrössen durch Vergleich mit den Messgrössen an Parallelmodulen erfolgt.

4. Vorrichtung zur Detektion von Natrium-Leckagen in Dampferzeugern zur Durchführung des Verfahrens nach Anspruch 1, gekennzeichnet durch die Anordnung von Temperaturfühlern (6; 17) im Inneren des Dampferzeugers.

5. Vorrichtung nach Anspruch 4, dadurch gekennzeichnet, dass die Temperaturfühler in einer Messlanze (17) angeordnet sind, die im Dampferzeuger im Bereich der Wärmetauscherflächen (4; 13) angebracht ist.

6. Vorrichtung nach Anspruch 4, gekennzeichnet durch die Verwendung nur eines Temperaturfühlers, der über einen grossen Bereich des Dampferzeugers ausgedehnt ist.

**Claims**

1. A method for the detection of sodium leakages in steam generators in which the reaction of sodium with water is observed, characterised in that for this purpose the characteristic change in temperature in the steam generator and/or in the primary or secondary circulation, produced by the reaction of sodium with water, is measured.

2. A method as claimed in Claim 1, characterised in that the quantitative detection of the leakage rate is effected by measuring the change in the product of temperature and flow in the primary or secondary circulation.

3. A method as claimed in Claim 1 or Claim 2, characterised in that the change in the measured values is established by carrying out a comparison with the measured values of parallel modules.

4. Apparatus for detecting sodium leakages in steam generators for carrying out the method claimed in Claim 1, characterised by the arrangement of temperatur sensors (6; 17) inside the steam generator.

5. Apparatus as claimed in Claim 4, characterised in that the temperature sensors are arranged in a measuring lance (17) which is inserted in the steam generator in the region of the heat exchange surfaces (4; 13).

6. Apparatus as claimed in Claim 4, characterised by the use of only one temperature sensor which extends over a large region of the steam generator.

**Revendications**

1. Procédé de détection de fuites de sodium dans les générateurs de vapeur, en observant la réaction du sodium sur l'eau, caractérisé en ce qu'il consiste, à cet effet, à mesurer dans le générateur de vapeur et/ou dans le circuit primaire ou secondaire, la variation de température caractéristique produite par la réaction du sodium sur l'eau.

2. Procédé suivant la revendication 1, caractérisé en ce qu'il consiste à effectuer la détermination quantitative du débit de fuites en mesurant la variation du produit de la température par le débit dans le circuit primaire ou secondaire.

3. Procédé suivant la revendication 1 ou 2, caractérisé en ce qu'il consiste à effectuer la détermination de la variation des grandeurs de mesure, par comparaison avec les grandeurs de mesure sur des modules parallèles.

4. Dispositif de détection de fuites de sodium dans les générateurs de vapeur, pour la mise en œuvre du procédé suivant la revendication 1, caractérisé par la disposition de sondes de température (6; 17) à l'intérieur du générateur de vapeur.

5. Dispositif suivant la revendication 4, caractérisé en ce que les sondes de température sont disposées dans une lance de mesure (17) qui est fixée dans le générateur de vapeur dans la région des surfaces d'échange de chaleur (4; 13).

6. Dispositif suivant la revendication 4, caractérisé par l'utilisation d'une seule sonde de température qui s'étend sur une grande région du générateur de vapeur.

FIG 1

FIG 2

FIG 3

FIG 4